(19) Europäisches Patentamt
European Patent Office
Office européen des brevets

(11) **EP 3 069 165 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(21) Anmeldenummer: **14777104.2**

(22) Anmeldetag: **29.09.2014**

(51) Int Cl.:
*G01S 15/931* (2020.01)          *G01S 7/52* (2006.01)
*G01S 7/521* (2006.01)

(86) Internationale Anmeldenummer:
**PCT/EP2014/070819**

(87) Internationale Veröffentlichungsnummer:
**WO 2015/071021 (21.05.2015 Gazette 2015/20)**

(54) **VERFAHREN ZUR EIGENDIAGNOSE MINDESTENS EINES SENSORS IM LAUFENDEN BETRIEB**

METHOD FOR SELF-DIAGNOSIS OF AT LEAST ONE SENSOR DURING OPERATION

PROCÉDÉ D'AUTODIAGNOSTIC D'AU MOINS UN CAPTEUR EN COURS DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013223416**

(43) Veröffentlichungstag der Anmeldung:
**21.09.2016 Patentblatt 2016/38**

(73) Patentinhaber: **Robert Bosch GmbH**
**70442 Stuttgart (DE)**

(72) Erfinder:
• **KLOTZ, Albrecht**
**71229 Leonberg (DE)**

• **SCHMID, Dirk**
**75397 Simmozheim (DE)**

(56) Entgegenhaltungen:
**DE-A1-102010 015 400      DE-A1-102012 005 893**
**JP-A- 2009 147 871**

• **"ADXL001: Analog Devices' New MEMS Vibration and Shock Sensor", , 29. April 2008 (2008-04-29), XP054975649, Gefunden im Internet: URL:https://www.youtube.com/watch?v=62fML W DoW-M [gefunden am 2014-12-16]**

EP 3 069 165 B1

## Beschreibung

Die Erfindung betrifft ein Verfahren zur Eigendiagnose eines ersten Ultraschallsensors. Weiterhin betrifft die Erfindung einen Sensor und ein Fahrzeug.

Stand der Technik

Ultraschallsensoren werden in Kraftfahrzeugen üblicherweise eingesetzt, um das Umfeld um das Kraftfahrzeug zu erfassen. So lassen sich mit Ultraschallsensoren zum Beispiel bewegte oder ruhende Objekte im Erfassungsbereich des Ultraschallsensors detektieren, indem ein vom Sensor gesendetes Signal an dem Objekt reflektiert, das Echo vom Sensor empfangen und in elektrische Signale umgewandelt wird und diese von einer Auswerteeinheit, welche auch als Sensorelektronik bezeichnet wird, hinsichtlich Laufzeit, Amplitude etc. ausgewertet werden. Daraus wird auf die Entfernung des Objekts geschlossen. Zusätzlich lässt sich auch durch Erfassung einer Dopplerverschiebung des Signals auf die Geschwindigkeit des Objekts schließen.

Fahrerassistenzfunktionen basierend auf Ultraschallsensoren sind schon seit mehr als 15 Jahren auf dem Markt. Die klassische Einparkhilfe wird zunehmend mit komplexeren Funktionen wie z.B. Ausparkunterstützung, semi-autonomes Einparken und Totwinkelassistenz (Side-View-Assist) ergänzt. Außerdem sind Funktionen in Entwicklung oder auf dem Markt, die je nach Ausprägungsform, als sicherheitsrelevant im Sinne der ISO-Norm ISO26262:2001-11 eingestuft werden.

Zur Realisierung von sicherheitsrelevanten Funktionen müssen die Ultraschallsensoren immer näher an ihren Leistungsgrenzen betrieben werden. Leistungseinbußen aufgrund von ungünstigen Umgebungsbedingungen oder Alterungseffekten führen zu Funktionseinschränkungen, die oft nicht detektiert werden können. Daher gewinnt eine umfassendere und gezieltere Eigendiagnose der Sensoren für diese anspruchsvolleren Funktionen zunehmend an Bedeutung.

DE 10 2006 053 112 offenbart ein Verfahren zum Regeln eines Sendeschalldrucks und einer einstellbaren Empfangsverstärkung insbesondere eines Ultraschallsensors mit einem Wandler. Das Verfahren umfasst das indirekte Messen des Sendeschalldrucks, welches durch das Messen von Amplituden einer Anregungsspannung des Wandlers erfolgt.

EP 1 612 531 betrifft einen mikromechanischen Drucksensor, welcher die Verformung einer mikromechanischen Membranstruktur erfasst. Die Erfassung kann unter anderem piezoelektrisch erfolgen. Zum Selbsttest oder zur Kalibrierung wird die Membran mit einem Piezowandler angeregt. Die Verformung kann entweder mit derselben oder einer weiteren Wandlereinrichtung piezoelektrisch, elektrostatisch oder optisch erfasst werden.

DE 37 07 620 beschreibt einen Beschleunigungssensor für dynamische Lautsprecher. Durch Messung der Auslenkung oder der Beschleunigung der Membran werden die mechanischen Eigenschaften des Lautsprechers elektronisch geregelt. Dazu werden Beschleunigungsaufnehmer mit einer seismisch aufgehängten Masse eingesetzt. Diese Beschleunigungsaufnehmer benötigen keinen Fixpunkt und ihr Ausgangssignal stimmt mit dem Schalldruck überein.

Aus dem Stand der Technik sind keine Verfahren oder Sensoren bekannt, mit welchen eine Eigendiagnose mit Quantifizierung von Funktionsbeeinträchtigungen von Ultraschallsensoren zufriedenstellend, im laufenden Betrieb möglich ist.

Offenbarung der Erfindung

Es werden ein Verfahren, ein Sensor und ein Fahrzeug gemäß den unabhängigen Ansprüchen bereitgestellt.

Durch Messung einer Beschleunigung einer Membran eines ersten Ultraschallsensors können Größen wie eine Auslenkung, ein Schalldruck und /oder eine Empfindlichkeit dieses ersten Sensors abgeschätzt werden. Bevorzugt wird auf Basis der gemessenen Beschleunigung der Membran der Schalldruck des ersten Sensors bestimmt. Die Empfindlichkeit oder Reichweite des ersten Sensors kann dann von dem Schalldruck des ersten Sensors abgeleitet werden. Durch die Quantifizierung dieser Größen besteht eine Vergleichbarkeit mit entsprechenden Referenzwerten, so dass der Zustand des ersten Sensors beurteilt und gegebenenfalls angepasst werden kann. "Entsprechend" bedeutet hier, dass ein Referenzwert dabei entsprechend der zu vergleichenden Größe oder entsprechend dem jeweiligen Zeitpunkt oder entsprechend anderen Funktionsbedingungen ausgewählt ist.

In einer bevorzugten Ausführungsform ist der erste Sensor ein Ultraschallsensor und der Beschleunigungssensor als mikroelektromechanisches System ausgeführt.

Ein Ultraschallsensor im Rahmen der vorliegenden Erfindung umfasst üblicherweise einen Sender zum Senden eines Ultraschallsignals und einen Empfänger, mit dem ein reflektiertes Echo des Ultraschallsignals empfangen werden kann. Hierbei ist es möglich, für den Sender und den Empfänger getrennte Bauteile vorzusehen, wobei in diesem Fall Sender und Empfänger vorzugsweise unmittelbar benachbart zueinander angeordnet werden. Auch ist es möglich, Sender und/oder Empfänger als ein Sensorarray zu gestalten. Dies ermöglicht eine dreidimensionale Erfassung der Umgebung. Es wird nicht nur die Entfernung eines Objekts sondern auch die räumliche Ausdehnung erkannt. Neben Ultraschallsensoren mit getrenntem Sender und Empfänger ist es auch möglich, Sensoren einzusetzen, die alternierend als Sender und Empfänger arbeiten. In diesem Fall wird zunächst ein Ultraschallsignal vom als Sender arbeitenden Ultraschallsensor gesendet, und nach dem Ausschwingen, das durch aktive oder passive Dämpfung beschleunigt werden kann, wird vom Sensor, der nun als Empfänger arbeitet, ein Echo des gesendeten und von einem Objekt reflektierten Signals empfangen.

Im Allgemeinen umfassen die Sensorparameter des Ultraschallsensors Sendeparameter, die den Sendepuls und dessen Sendespektrum charakterisieren. Solche Parameter sind beispielsweise der Sendestrom, die Sendepulsdauer, die Frequenz oder die Amplitude, wobei der Sendestrom proportional zur Amplitude ist.

In einer bevorzugten Ausführungsform ist der erste Sensor mit einem System zur Eigendiagnose ausgestattet, um Funktionsbeeinträchtigungen zu detektieren. Dazu dient eine Schätzung der Empfindlichkeit, welche bevorzugt im laufenden Betrieb stattfindet.

In einer Ausführungsform können neben einem Signal, das aus einer Eigendiagnose des ersten Sensors resultiert, weitere direkte oder indirekt abgeleitete Signale, wie z.B. ein Temperatursignal, eine sensoreigene Rauschschätzung und/oder eine Blindheitserkennung berücksichtig werden, bevor auf Grund von detektierten Funktonstörungen eine Fehlermeldung und/oder eine Systemreaktion ausgelöst wird. So kann beispielsweise beim Abweichen der ermittelten Empfindlichkeit von einem vorbestimmten Schwellenwert die Empfindlichkeit des ersten Sensors angepasst und/oder eine Fehlermeldung erzeugt und/oder mindestens eine vom ersten Sensor abhängige Funktion deaktiviert werden.

In einer weiteren Ausführungsform kann die Empfindlichkeit des Ultraschallsensors mit einer geeigneten Veränderung des jeweiligen Sendestroms und/oder der Empfangsverstärkung angepasst werden.

In einer weiteren Ausführungsform kann die gewonnene Information zum momentanen Schalldruck und/oder zur momentanen Empfindlichkeit des ersten Sensors dazu verwendet werden, die Auswertung der mittels des ersten Sensors empfangenen Signale innerhalb der Auswerteeinheit anzupassen. Hierzu können beispielsweise Parameter und/oder Schwellenwerte bei der Auswertung der Sensorsignale verändert werden, wenn diagnostiziert worden ist, dass sich der Schalldruck oder die Empfindlichkeit und damit die Funktionsweise des ersten Sensors geändert hat, der erste Sensor jedoch weiter verwendet werden kann. Als momentan wird im Rahmen der Erfindung eine Größe bezeichnet, welche einem begrenzten Zeitraum zuzuordnen ist, welcher beispielsweise der Mittelwert mit Bezug auf einen begrenzten Zeitraum ist. Bevorzugt wird als "momentan" eine Größe bezeichnet, welche genau einem Zeitpunkt zugeordnet ist.

Der erfindungsgemäße erste Sensor umfasst mindestens einen Beschleunigungssensor, welcher die Beschleunigung der Membran des ersten Sensors bestimmt.

Bevorzugt ist der eingesetzte Beschleunigungssensor als mikroelektromechanisches System (MEMS) ausgeführt. Ein mikroelektromechanisches System wird auch als Mikrosystem bezeichnet. Es umfasst ein miniaturisiertes Gerät, eine Baugruppe oder ein Bauteil, das Komponenten typischerweise im Mikrometerbereich aufweist, die als System zusammenwirken. Das mikroelektromechanische System umfasst bevorzugt einen oder mehrere Sensoren, sowie Aktoren und eine Steuerungselektronik auf einem Chip. Beispielsweise kann ein derartiges mikroelektromechanisches System auf einem Substrat wie etwa Silicium oder Galliumarsenid hergestellt werden. Mikroelektromechanische Systeme haben den Vorteil, dass sie auf Grund ihrer Größe besonders kostengünstig gefertigt werden können und ein großes Funktionsspektrum aufgrund der Integration elektrischer und nicht-elektrischer Funktionen bieten.

Eine Stromversorgung des mikroelektromechanischen Systems oder des mindestens einen Beschleunigungssensors im erfindungsgemäßen Sensor kann über das Innere eines Membrantopfes erfolgen.

Bevorzugt erfolgt die Schalldruckerzeugung des ersten Ultraschallsensors üblicherweise wie bei bereits existierenden Ultraschallsensoren. Insbesondere kann der Membrantopf eine Geometrie aufweisen, die der Geometrie eines Serienmembrantopfs entspricht, so dass auf bewährte Bauteile mit hoher Qualität zurückgegriffen werden kann.

Der Schalldruck eines Ultraschallsensors wird in der Fertigung üblicherweise in Anpassung an einen Normwert eingestellt, wobei die Stromstärke des Anregungsimpulses entsprechend variiert wird. Der erzeugte Schalldruck eines Ultraschallsensors im laufenden Betrieb ist ein Maß für Empfindlichkeit des Ultraschallsensors, welche der zu erzielenden Reichweite des Ultraschallsensors entspricht. Der quantitative Zusammenhang einer ausgesandten Echoamplitude und einer empfangenden Echoamplitude ist von zahlreichen Einflussgrößen wie beispielsweise einer Luftdämpfung, der Art und Geometrie eines detektierten Objektes und der Form der Schallkeule abhängig. Der erzeugte Schalldruck ist linear von der Auslenkung der Membran des Sensors abhängig, wenn die Anregungsfrequenz und die Umgebungstemperatur konstant sind. Als Auslenkung wird im Rahmen der Erfindung die momentane Entfernung mindestens eines Punktes auf der Membran von seiner Ruhelage verstanden. Dieser Zusammenhang von Schalldruck und Auslenkung wird in folgender Gleichung dargestellt:

$$p = 2 \cdot \pi \cdot \xi \cdot f \cdot Z \,, \qquad (1)$$

wobei $p$ der Schalldruck, $\xi$ die Auslenkung, $f$ die Anregungsfrequenz und $Z$ die Schallkennimpedanz von Luft ist. Die Anregungsfrequenz ist typischerweise gemäß dem entsprechendem Design durch die Sensorelektronik gegeben. Die Schallkennimpedanz $Z$ von Luft ist definiert durch

$$Z = \rho \cdot c \,, \qquad (2)$$

wobei $\rho$ die Dichte der Luft und $c$ die Schallgeschwindigkeit ist. Die Schallkennimpedanz $Z$ der Luft ist also von der Dichte $\rho$ der Luft und damit von der Temperatur der Luft abhängig. Damit kann die Schallkennimpedanz $Z$ von Luft durch Messung der Umgebungstemperatur abgeschätzt werden. Somit ist auch der Schalldruck temperaturabhängig.

In einer bevorzugten Ausführungsform wird auf Basis der gemessenen Beschleunigung der Membran des ersten Ultraschallsensors eine Temperaturkompensation des Schalldrucks $p$ des ersten Sensors durchgeführt. Die Temperaturkompensation kann durch Nachführung des Sendestroms erreicht werden. Weiterhin besteht ein linearer Zusammenhang zwischen dem Schalldruck $p$ und dem Scheitelwert der Beschleunigung $\hat{a}$ der Membran, sofern die Anregungsfrequenz $f$ konstant ist wie sich aus der Gleichung (1) ableiten lässt. Hierzu wird die Verschiebung $s$ der Membran beschrieben als

$$s = \xi \cdot \cos(2\pi f t) \,, \qquad (3)$$

so dass die Beschleunigung $a$

$$a = \ddot{s} = -\xi \cdot (2\pi f)^2 \cdot \cos(2\pi f t) \qquad (4)$$

entspricht. Gleichung 4 zeigt, dass die Auslenkung berechnet werden kann, wenn die Beschleunigung und die Anregungsfrequenz bekannt sind. Der Scheitelwert der Beschleunigung $\hat{a}$, kann beschrieben werden als

$$\hat{a} = -\xi \cdot (2\pi f)^2 \qquad (5),$$

wobei der Scheitelwert als maximaler Betrag der cos-Funktion angenommen wird, so dass sich mit Gleichung 5 die Auslenkung $\xi$ in Gleichung (1) ersetzen lässt und sich ein linearer Zusammenhang zwischen dem Schalldruck $p$ und dem Scheitelwert der Beschleunigung $\hat{a}$ ergibt:

$$p = \frac{\hat{a}}{2\pi f} \cdot Z \qquad (6).$$

In einer Ausführungsform wird die momentane Auslenkung einer Membran eines ersten Sensors mittels eines Beschleunigungssensors und entsprechender Auswertungselektronik bestimmt, so dass der erzeugte Schalldruck des ersten Sensors und damit die Empfindlichkeit des ersten Sensors aus der Beschleunigung oder der Auslenkung abgeleitet werden können. Die Empfindlichkeit kann als Detektionsvermögen im Vergleich zu einem Referenzzustand verstanden werden, wobei der Referenzzustand durch im Fertigungswerk kalibrierte Größen wie Schalldruck und Verstärkung gegeben sein kann. Die Verstärkung bleibt im laufenden Betrieb unverändert, während der Schalldruck durch äußere Einflüsse variieren kann.

Die Erfindung kann insbesondere bei solchen Ultraschallsensoren eingesetzt werden, welche beispielsweise im vorderen und/oder hinteren Stoßfänger eines Fahrzeugs zum Zwecke der Parkassistenz und/oder Kollisionsvermeidung vorgesehen sind.

Insbesondere kann der erfindungsgemäße Sensor in einem Ultraschallsystem verbaut sein, welches eine Gruppe von Ultraschallsensoren umfasst, wobei zumindest einer, bevorzugt alle Ultraschallsensoren die erfindungsgemäßen Merkmale aufweisen. Das Ultraschallsystem kann beispielsweise dazu eingerichtet sein, einen Bereich einer Umgebung eines Kraftfahrzeugs zu erfassen. Das Ultraschallsystem weist darüber hinaus bevorzugt auch eine der jeweiligen Gruppe zugeordnete Steuereinrichtung und eine Signalverarbeitungseinrichtung auf.

Vorteile der Erfindung

Durch die Eigendiagnose, wobei die Beschleunigung der Sensormembran gemessen wird, können Empfindlichkeitsunterschiede einzelner Sensoren über die Zeit als auch Empfindlichkeitsunterschiede zwischen den im Fahrzeug gemeinsam verbauten Sensoren diagnostiziert werden. Liegen die geschätzten Empfindlichkeitsunterschiede außerhalb von Spezifikationsgrenzen, kann entweder eine entsprechende Information an den Fahrer geliefert werden und/oder ein Systemfehler generiert werden, der in der Werkstatt z.B. durch Sensortausch behoben werden muss. Wird mit dem erfindungsgemäßen Verfahren ein Schalldruck und/oder eine Empfindlichkeit eines Ultraschallsensors bestimmt, welcher und/oder welche von einem vorbestimmten Schwellenwert abweicht, so kann auch der Sendestrom und/oder die Empfangsverstärkung des Ultraschallsensors zur dynamischen Anpassung des Schalldrucks und/oder der Empfindlichkeit verändert werden. Dadurch kann entweder adäquat auf Funktionseinschränkungen im System reagiert werden oder die Funktionseinschränkungen werden vermieden bzw. reduziert. Die Eigendiagnose auf Basis einer Beschleunigungsmessung erlaubt eine Beurteilung der momentanen Sensordegradation, welche durch sensorinterne Defekte und/oder durch physikalische Veränderungen des Membrantopfes, wie zum Beispiel Vereisungen, Verschmutzungen und Deformationen, begründet sein kann.

Außerdem kann die Information der aktuellen Sensorempfindlichkeit, welche das erfindungsgemäße Verfahren liefert, dazu eingesetzt werden, den Schalldruck bei der Erzeugung des Sendeimpulses des Ultraschallsensors nachzuregeln, um die Leistung des mindestens einen Ultraschallsensors auch unter dem Einfluss von wechselnden Umgebungsbedingungen wie einer wechselnden Temperatur konstant zu halten. Dazu kann die momentane Membranbeschleunigung und/oder die Membranauslenkung als Führungsgröße in den Regelkreis einbezogen werden, welcher die Stromstärke des Anregungsimpulses einstellt.

Ein weiterer Vorteil der Eigendiagnose, wobei die Beschleunigung der Sensormembran gemessen wird, ist, dass die momentane Empfindlichkeit eines Ultraschallsensors direkt auf Basis einer Absolutmessung und ohne die Notwendigkeit einer Referenzmessung abgeschätzt werden kann, so dass die Eigendiagnose des Sensors verbessert wird.

Weiterhin ist an der beschleunigungsbasierten Eigendiagnose vorteilhaft, dass schnell und mit jeder Ansteuerung des Ultraschallsensors eine Information zur Empfindlichkeit des Ultraschallsensors generiert werden kann, ohne dass die Messaktivität des Ultraschallsensors unterbrochen werden muss. Auf diese Weise wird eine kontinuierliche Sicherstellung verwendbarer Messergebnisse ermöglicht.

Ein weiterer Vorteil der Eigendiagnose auf Basis der Beschleunigungsmessung der Sensormembran ergibt sich für die Ausbeute in der Sensorfertigung durch Aufweitung bzw. nicht übermäßige Einengung der maximal erlaubten Empfindlichkeitsstreuung.

Es wird neben einem Verfahren, ein Sensor und ein Fahrzeug mit einem erfindungsgemäßen Sensor, welcher in ein Fahrzeugassistenzsystem integriert sein kann, bereitgestellt. Durch die Verwendung eines Fahrzeugassistenzsystems mit erfindungsgemäßem Sensor wird insbesondere gewährleistet, dass die von einem solchen Fahrzeugassistenzsystem ermittelte Kollisionsgefahr des Fahrzeuges mit mindestens einem Fahrzeugumgebungshindernis zuverlässig ermittelt werden kann.

Kurze Beschreibung der Zeichnungen

Ausführungsbeispiele der Erfindung sind in den Zeichnungen dargestellt und werden in der nachfolgenden Beschreibung näher erläutert. Es zeigen

Figur 1     eine schematische Schnittdarstellung eines ersten Ausführungsbeispiels eines ersten Sensors;

Figur 2     eine schematische Schnittdarstellung eines zweiten Ausführungsbeispiels eines ersten Sensors;

Figur 3     ein Fahrzeug mit erfindungsgemäßem Sensor und

Figur 4     ein Flussdiagramm einer Ausführungsform des erfindungsgemäßen Verfahrens.

Ausführungsformen der Erfindung

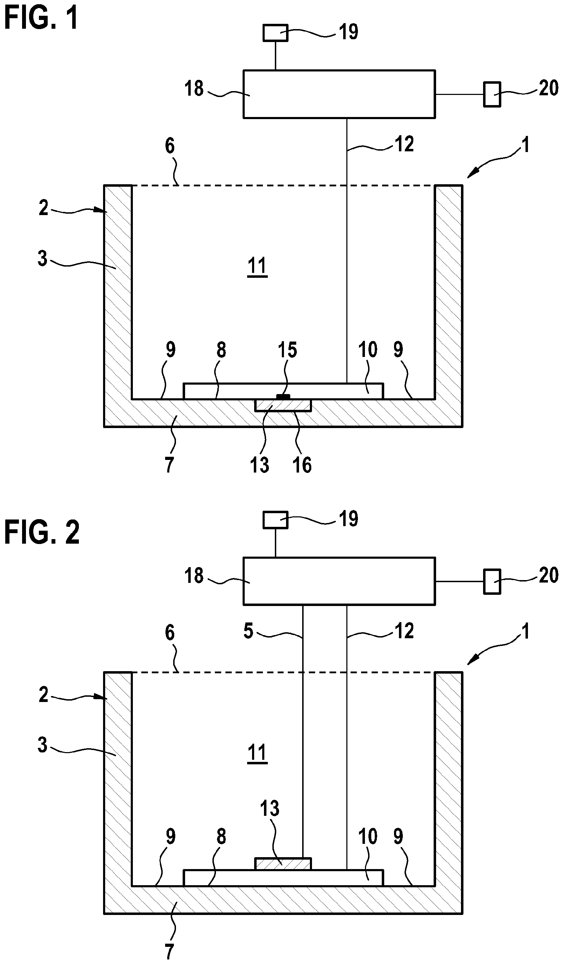

Figur 1 zeigt eine schematische Schnittdarstellung eines ersten Ausführungsbeispiels eines ersten Sensors.

In Figur 1 ist ein erster Sensor 1 in einer Schnittdarstellung gezeigt. Dieser erste Sensor 1 ist bevorzugt ein Ultraschallsensor. Ein Membrantopf 2 des ersten Sensors 1, welcher vorzugsweise in zylindrischer Form ausgeführt ist, weist eine umlaufende Wand 3 auf, die einseitig mit einer Membran 7 verschlossen ist. Der Membrantopf 2 weist an seiner Oberseite eine Öffnung 6 auf, wobei der Membrantopf 2 beispielsweise ein fließgepresstes Aluminiumteil sein

**EP 3 069 165 B1**

kann.

Die umlaufende Wand 3 umschließt einen Innenraum 11, in dem auf der Innenseite der Membran 7 ein Sensorelement 10, welches bevorzugt ein Piezoelement ist, angeordnet ist. Das Sensorelement 10 des ersten Sensors 1 ist im zentrischen Abschnitt 8 angeordnet und dort beispielsweise mit dem zentrischen Abschnitt 8 verklebt. Der zentrische Abschnitt 8 ist von einem Randabschnitt 9 umgeben.

Der erste Sensor 1 weist außerdem mindestens einen Beschleunigungssensor 13 auf, welcher bevorzugt als mikroelektromechanisches System (MEMS) ausgeführt ist. Der Beschleunigungssensor 13 ist auf der Membran 7 des ersten Sensors 1, bevorzugt im zentrischen Abschnitt 8, und besonders bevorzugt direkt im Zentrum der Membran 7 des ersten Sensors 1, angebracht. Die bevorzugte Ausführungsform des Beschleunigungssensors 13 als MEMS, welche eine kleine Bauform impliziert, lässt eine Integration des Beschleunigungssensors 13 in eine Vertiefung 16 des Membrantopfes 2 des ersten Sensors 1 zu. Das Sensorelement 10 des ersten Sensors 1 und der Beschleunigungssensor 13 weisen einen Kontakt 15 auf, durch den eine Verbindung des Beschleunigungssensors 13 mit einer Sensorelektronik 18 sichergesellt wird. Zur Verbindung des Beschleunigungssensors 13 mit der Sensorelektronik 18 wird bevorzugt eine Leiterbahn 12 der Verbindung des Sensorelementes 10 mit der Sensorelektronik 18 genutzt. Im dargestellten Ausführungsbeispiel ist der Beschleunigungssensor 13 zentrisch zur Membran 7 und zentrisch zum Sensorelement 10 angeordnet, um eine optimale Kopplung des mit dem Beschleunigungssensor 13 ermittelten Beschleunigungssignals zur momentanen Auslenkung und Amplitude zu erreichen. Die genaue Positionierung des Beschleunigungssensors 13 kann das Ergebnis von Versuchsreihen sein, mittels welcher eine optimale Abschätzung des Schalldrucks und/oder der Empfindlichkeit des ersten Sensors 1 ermittelt wurde.

Der Sensor, welcher in Figur 1 illustriert ist, weist eine Membran 7, die Sensorelektronik 18 und einen Beschleunigungssensor 13 auf. Mindestens mittels der Leiterbahn 12 ist der erste Sensor 1 mit der Einheit der Sensorelektronik 18 verbunden. Bevorzugt ist an die Sensorelektronik 18 außerdem ein Temperaturfühler 20 angeschlossen. Weiterhin kann die Sensorelektronik 18 eine Speichereinheit 19 umfassen, in der Referenzwerte zum Vergleich mit der momentanen Empfindlichkeit, Auslenkung oder dem Schalldruck hinterlegt sind. In einer alternativen Ausführungsform kann ein Referenzwert eine Größe eines weiteren Ultraschallsensors in einem komplexeren Sensorsystems sein oder auf einer Referenzmessung des ersten Sensors 1 oder eines weiteren Sensors basieren. Dabei ist der Beschleunigungssensor 13 so angeordnet, dass er die Beschleunigung der Membran 7 misst und die Daten an die Sensorelektronik 18 überträgt. Die Leiterbahn 12 dient der Übertragung von Messsignalen des Beschleunigungssensors 13 und des Sensorelementes 10 und auch der Übertragung von Steuersignalen an das Sensorelement 10. Diese Steuersignale werden bevorzugt von der Sensorelektronik 18 unter Verwendung des erfindungsgemäßen Verfahrens auf Basis der vom Beschleunigungssensor 13, und gegebenenfalls unter Berücksichtigung von mittels des Temperaturfühlers aufgenommenen Daten sowie Referenzwerten, generiert. Die Steuersignale können dazu dienen, der Variation des Schalldrucks des ersten Sensors 1 und damit auch der Variation der Empfindlichkeit des ersten Sensors 1, welche beispielsweise durch Temperaturschwankungen oder Alterungsprozesse bedingt ist, entgegen zu wirken, um eine konstante Empfindlichkeit des ersten Sensors 1 zu erzielen. Ebenso kann der Schalldruck und/oder die Empfindlichkeit verschiedener Sensoren, welche Teil des komplexeren Sensorsystems sind, aufeinander abgestimmt werden. Dazu können an der Sensorelektronik 18 weitere Ultraschallsensoren angeschlossen sein. Figur 2 zeigt eine schematische Schnittdarstellung eines zweiten Ausführungsbeispiels eines ersten Sensors.

In Figur 2 ist ein erster Sensor 1, ein Ultraschallsensor, in schematischer Schnittdarstellung gemäß eines weiteren Ausführungsbeispiels dargestellt. Der erste Sensor 1 kann im Wesentlichen wie mit Bezug zu Figur 1 beschrieben ausgestaltet sein. Im Unterschied zur Figur 1 ist der Beschleunigungssensor 13 hier auf dem Sensorelement 10 angebracht und weist eine separate Leiterbahn 5 zwischen dem Beschleunigungssensor 13 und der Sensorelektronik 18 auf.

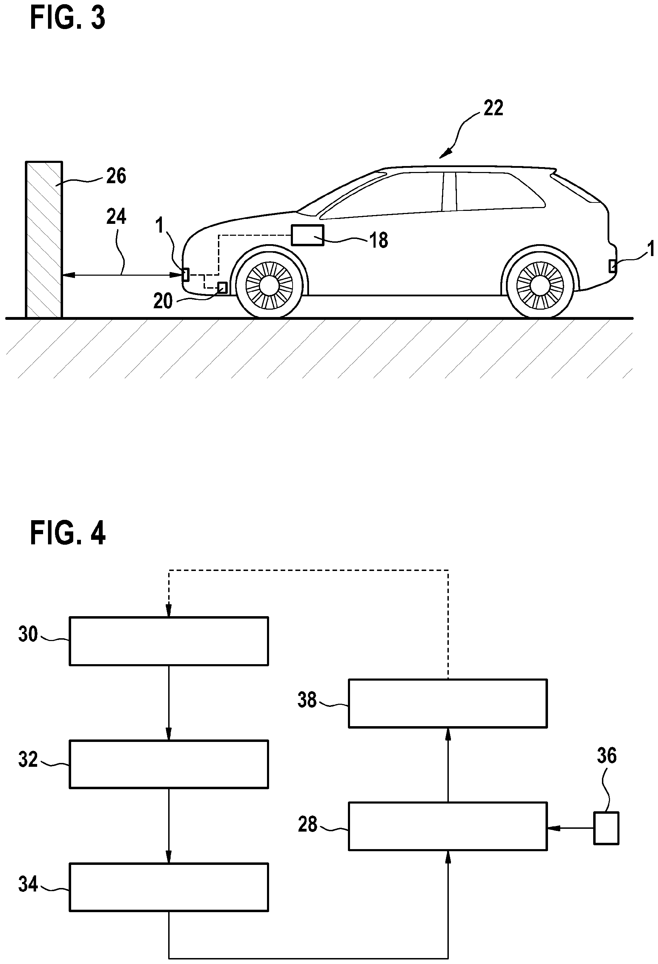

Figur 3 zeigt ein Fahrzeug mit erfindungsgemäßem Sensor.

Das in Figur 3 dargestellte Fahrzeug 22 weist mindestens einen erfindungsgemäßen ersten Sensor 1 auf, mit welchem beispielsweise die Distanz 24 zwischen dem Fahrzeug 22 und einem Hindernis 26 erfasst werden kann. Jeweils ein erster Sensor 1 oder mehrere erste Sensoren 1 befindet sich oder befinden sich bevorzugt an der Vorderseite und/oder an der Rückseite des Fahrzeugs 22. Mit Hilfe der Sensorelektronik 18 können die ermittelten Daten des mindestens einen ersten Sensors 1 verarbeitet und zu Steuersignalen umgewandelt werden, welche beispielsweise Warnsignale auslösen. Da die Membran 7 des mindestens einen ersten Sensors 1 mit mindestens einem Beschleunigungssensor 13 ausgestattet ist, welcher Aussagen zum Schalldruck und/oder zur Empfindlichkeit des mindestens einen ersten Sensors 1 zulässt, können Warnsignale oder auch Aktionen ausgelöst werden, welche den Zustand und die Verlässlichkeit des mindestens einen ersten Sensors 1 betreffen. Hierzu ist keine vergleichende Referenzmessung nötig, da die ermittelte Beschleunigung der Membran 7 als Absolutwert zum gewünschten Zweck ausgewertet werden kann.

Figur 4 zeigt ein Flussdiagramm einer Ausführungsform des erfindungsgemäßen Verfahrens.

In einem ersten Schritt 30 wird zunächst die momentane Beschleunigung der Membran 7 mit Hilfe des Beschleunigungssensors 13 gemessen. Daraus kann in einem zweiten Schritt 32 die Größe der momentanen Auslenkung und in einem dritten Schritt 34 die Größe des momentanen Schalldrucks der Membran 7, welcher ein Maß für die Empfindlichkeit darstellt, aus der momentanen Beschleunigung oder der momentanen Auslenkung bestimmt werden, sofern die Temperatur der Luft, und die Anregungsfrequenz bekannt sind. Bei der Bestimmung des momentanen Schalldrucks aus der Beschleunigung bezieht sich dieser hierbei auf den Scheitelwert der Beschleunigung. Weiterhin kann ein quadratischer Mittelwert des Schalldrucks über einen definierten Zeitraum gebildet werden und der quadratische Mittelwert des Schalldrucks kann als die mit einem entsprechenden Referenzwert vergleichbare Größe betrachtet werden. Der Zeitraum entspricht bevorzugt einer Sendepulsdauer. Zur Messung der momentanen Lufttemperatur 36 ist der Temperaturfühler 20 in das System integriert. Der Wert des ermittelten momentanen Schalldrucks wird, genauso wie der Wert der momentanen Lufttemperatur, welcher mit dem Temperaturfühler 20 ermittelt wurde, und gegebenenfalls Referenzwerte aus Referenzmessungen an eine Regelung 28 übergeben. Auf diese Weise kann unter Berücksichtigung von mindestens einem Referenzwert, mit dem mindestens eine Größe des ersten Sensors 1 verglichen wird, in einem weiteren Schritt 38 der Schalldruck, und damit die Empfindlichkeit, des ersten Sensors 1 mit Hilfe des Sensorelementes 10 an momentane Umgebungsbedingungen wie die momentane Lufttemperatur oder auch an Alterungsprozesse angepasst werden. Die Stromstärke des Anregungsimpulses der Membran 7 ist dabei die Stellgröße der Regelung 28. Da die Ermittlung und Regelung des momentanen Schalldrucks bevorzugt auf Basis des Absolutwertes der momentanen Beschleunigung als Steuergröße erfolgt, ist keine Referenzmessung notwendig. Dies ermöglicht eine sehr schnelle Eigendiagnose des ersten Sensors 1 mit jeder Ansteuerung des ersten Sensors 1. Die momentane Beschleunigung fungiert dabei als Führungsgröße zur Einstellung der Stromstärke des Anregungsimpulses der Membran 7.

## Patentansprüche

1. Verfahren zur Eigendiagnose eines Ultraschallsensors (1) für ein Fahrzeugas-sistenzsystem, wobei der Ultraschallsensor dazu eingerichtet i ist, das Umfeld um ein Kraftfahrzeug zu erfassen, wobei eine Beschleunigung einer Membran (7) des Ultra-schallsensors (1) mit einem Beschleunigungssensor (13) gemessen und aus der Beschleunigung eine mit einem entsprechenden Referenzwert vergleichbare Größe bestimmt wird, wobei der Beschleunigungssensor (13) auf einem Sensorelement (10) des Ultraschallsensors (1) angeordnet ist, und wobei das Sensorelement (10) ein Piezoelement ist.

2. Verfahren nach Anspruch 1, **dadurch gekennzeichnet, dass** die mit dem entsprechenden Referenzwert vergleichbare Größe auf einer Auslenkung der Membran (7) oder auf einem vom Ultraschallsensor (1) erzeugten Schalldruck oder auf einer Empfindlichkeit des Ultraschallsensors (1) oder auf Kombinationen daraus basiert.

3. Verfahren nach einem der vorhergehenden Ansprüche, **dadurch gekennzeichnet, dass** der Vergleichswert ein in einer Sensorelektronik (18) oder in einer Speichereinheit (19) gespeicherter Sollwert oder eine Größe eines weiteren Ultraschallsensors ist oder auf einer Referenzmessung basiert.

4. Verfahren nach einem der vorhergehenden Ansprüche, **dadurch gekennzeichnet, dass** die Beschleunigung der Membran (7) des Ultraschallsensors (1) als Steuergröße zur Regelung des Schalldruckes des Ultraschallsensors (1) herangezogen wird.

5. Verfahren nach einem der vorhergehenden Ansprüche, **dadurch gekennzeichnet, dass** die Beschleunigung der Membran (7) des Ultraschallsensors (1) zur Temperaturkompensation des Schalldrucks des Ultraschallsensors (1) herangezogen wird.

6. Ultraschallsensor (1) für ein Fahrzeugassistenzsystem, wobei der Ultraschallsensor dazu eingerichtet ist, das Umfeld um ein Kraftfahrzeug zu erfassen, umfassend mindestens eine Membran (7) und ein Sensorelement (10), **gekennzeichnet durch** mindestens einen Beschleunigungssensor (13), welcher die Beschleunigung der mindestens einen Membran (7) bestimmt, wobei der mindestens eine Beschleunigungssensor (13) auf dem Sensorelement (10) angeordnet ist, und wobei das Sensorelement (10) ein Piezoelement ist. Ansprüche - Reinfassung

7. Ultraschallsensor (1) nach Anspruch 6, **dadurch gekennzeichnet, dass** der mindestens eine Beschleunigungssensor auf der Membran (7) des Ultraschallsensors (1) (1) angeordnet ist.

8. Ultraschallsensor (1) nach einem der Ansprüche 6 bis 7, wobei der mindestens eine Beschleunigungssensor als mikroelektromechanisches System (MEMS) ausgeführt ist.

9. Ultraschallsensor (1) nach einem der Ansprüche 6 bis 8, umfassend eine Sensorelektronik (18) zur Eigendiagnose des Ultraschallsensors (1) basierend auf einer Auslenkung der Membran (7) oder auf einem vom Ultraschallsensor (1) erzeugten Schatidruck oder auf einer Empfindlichkeit des Ultraschallsensors (1) oder auf Kombinationen daraus.

10. Fahrzeug (22), umfassend mindestens einen Ultraschallsensor (1) nach einem der Ansprüche 6 bis 9.

**Claims**

1. Method for the self-diagnosis of an ultrasonic sensor (1) for a vehicle assistance system, wherein the ultrasonic sensor is configured to capture the environment around a motor vehicle, wherein an acceleration of a diaphragm (7) of the ultrasonic sensor (1) is measured using an acceleration sensor (13) and a variable which can be compared with a corresponding reference value is determined from acceleration, wherein the acceleration sensor (13) is arranged on a sensor element (10) of the ultrasonic sensor (1), and wherein the sensor element (10) is a piezo element.

2. Method according to Claim 1, **characterized in that** the variable which can be compared with the corresponding reference value is based on a deflection of the diaphragm (7) or on a sound pressure generated by the ultrasonic sensor (1) or on a sensitivity of the ultrasonic sensor (1) or on combinations thereof.

3. Method according to one of the preceding claims, **characterized in that** the comparison value is a target value stored in sensor electronics (18) or in a storage unit (19) or a variable of a further ultrasonic sensor or is based on a reference measurement.

4. Method according to one of the preceding claims, **characterized in that** the acceleration of the diaphragm (7) of the ultrasonic sensor (1) is used as a control variable for regulating the sound pressure of the ultrasonic sensor (1).

5. Method according to one of the preceding claims, **characterized in that** the acceleration of the diaphragm (7) of the ultrasonic sensor (1) is used for the temperature compensation of the sound pressure of the ultrasonic sensor (1).

6. Ultrasonic sensor (1) for a vehicle assistance system, wherein the ultrasonic sensor is configured to capture the environment around a motor vehicle, comprising at least one diaphragm (7) and a sensor element (10), **characterized by** at least one acceleration sensor (13) which determines the acceleration of the at least one diaphragm (7), wherein the at least one acceleration sensor (13) is arranged on the sensor element (10), and wherein the sensor element (10) is a piezo element.

7. Ultrasonic sensor (1) according to Claim 6, **characterized in that** the at least one acceleration sensor is arranged on the diaphragm (7) of the ultrasonic sensor (1).

8. Ultrasonic sensor (1) according to one of Claims 6 to 7, wherein the at least one acceleration sensor is in the form of a micro-electromechanical system (MEMS).

9. Ultrasonic sensor (1) according to one of Claims 6 8, comprising sensor electronics (18) for the self-diagnosis of the ultrasonic sensor (1) on the basis of a deflection of the diaphragm (7) or a sound pressure generated by the ultrasonic sensor (1) or a sensitivity of the ultrasonic sensor (1) or combinations thereof.

10. Vehicle (22) comprising at least one ultrasonic sensor (1) according to one of Claims 6 to 9.

**Revendications**

1. Procédé d'autodiagnostic d'un capteur à ultrasons (1) pour un système d'assistance de véhicule, le capteur à ultrasons étant aménagé pour détecter l'environnement autour d'un véhicule automobile, dans lequel une accélération d'une membrane (7) du capteur à ultrasons (1) est mesurée par un capteur d'accélération (13), et une grandeur pouvant être comparée à une valeur de référence correspondante est déterminée à partir de l'accélération, le capteur d'accélération (13) étant disposé sur un élément de capteur (10) du capteur à ultrasons (1), l'élément de capteur (10) étant un élément piézoélectrique.

2. Procédé selon la revendication 1, **caractérisé en ce que** la grandeur pouvant être comparée à la valeur de référence correspondante est basée sur une déflexion de la membrane (7) ou sur une pression acoustique produite par le capteur à ultrasons (1) ou sur une sensibilité du capteur à ultrasons (1) ou sur des combinaisons de celles-ci.

**3.** Procédé selon l'une quelconque des revendications précédentes, **caractérisé en ce que** la valeur de comparaison est une valeur de consigne stockée dans une électronique de capteur (18) ou dans une unité de mémoire (19) ou une grandeur d'un autre capteur à ultrasons ou est basée sur une mesure de référence.

**4.** Procédé selon l'une quelconque des revendications précédentes, **caractérisé en ce que** l'accélération de la membrane (7) du capteur à ultrasons (1) est utilisée comme une grandeur de commande pour réguler la pression acoustique du capteur à ultrasons (1).

**5.** Procédé selon l'une quelconque des revendications précédentes, **caractérisé en ce que** l'accélération de la membrane (7) du capteur à ultrasons (1) est utilisée pour la compensation thermique de la pression acoustique du capteur à ultrasons (1).

**6.** Capteur à ultrasons (1) pour un système d'assistance de véhicule, dans lequel le capteur à ultrasons est aménagé pour détecter l'environnement autour d'un véhicule automobile, comprenant au moins une membrane (7) et un élément de capteur (10), **caractérisé par** au moins un capteur d'accélération (13) qui détermine l'accélération de ladite au moins une membrane (7), ledit au moins un capteur d'accélération (13) étant disposé sur l'élément de capteur (10), et l'élément de capteur (10) étant un élément piézoélectrique.

**7.** Capteur à ultrasons (1) selon la revendication 6, **caractérisé en ce que** ledit au moins un capteur d'accélération est disposé sur la membrane (7) du capteur à ultrasons (1).

**8.** Capteur à ultrasons (1) selon l'une quelconque des revendications 6 à 7, dans lequel ledit au moins un capteur d'accélération est réalisé sous la forme d'un système microélectromécanique (MEMS).

**9.** Capteur à ultrasons (1) selon l'une quelconque des revendications 6 à 8, comprenant une électronique de capteur (18) pour l'autodiagnostic du capteur à ultrasons (1) sur la base d'une déflexion de la membrane (7) ou d'une pression acoustique produite par le capteur à ultrasons (1) ou d'une sensibilité du capteur à ultrasons (1) ou des combinaisons de celles-ci.

**10.** Véhicule (22), comprenant au moins un capteur à ultrasons (1) selon l'une quelconque des revendications 6 à 9.

# FIG. 1

# FIG. 2

# FIG. 3

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006053112
- EP 1612531 A
- DE 3707620